# EUROPÄISCHE PATENTSCHRIFT

(11) **EP 3 071 336 B1**
(45) Veröffentlichungstag und Bekanntmachung des Hinweises auf die Patenterteilung: **10.07.2019**
(21) Anmeldenummer: 14808831.3
(22) Anmeldetag: 14.11.2014
(51) Int. Cl.: B05B 13/04, B25J 11/00, B25J 21/00, B25J 19/00, F16P 1/02, B05B 12/32, B05B 16/00, B05B 16/40, B05B 12/16

(54) **DICHTUNGSANORDNUNG FÜR EINEN BEHANDLUNGSRAUM**
SEALING ASSEMBLY FOR A TREATMENT CHAMBER
DISPOSITIF DE TRAITEMENT D'ARTICLES

(30) Priorität: 16.11.2013 DE 102013019231
(43) Veröffentlichungstag der Anmeldung: 28.09.2016
(73) Patentinhaber: Eisenmann SE, 71032 Böblingen (DE)
(72) Erfinder: SCHWAB, Stephan, D-71111 Waldenbuch (DE)
(74) Vertreter: Ostertag & Partner Patentanwälte mbB
(86) Internationale Anmeldenummer: PCT/EP2014/003059
(87) Internationale Veröffentlichungsnummer: WO 2015/070988

(56) Entgegenhaltungen:
- EP-A2- 1 331 038
- WO-A2-01/53000
- DE-A1- 2 521 506
- DE-A1- 3 023 044
- DE-C1- 3 636 416
- DE-U- 1 883 255
- FR-A1- 2 301 197

## Beschreibung

Die Erfindung betrifft eine Vorrichtung zum Behandeln von Gegenständen mit
a) einem Behandlungsraum, bei welchem eine Wand mit einem ersten Wandabschnitt und einem zweiten Wandabschnitt vorhanden ist, zwischen denen ein in der Wand verlaufender Spalt ausgebildet ist;
b) einer Einrichtung, insbesondere einer Behandlungseinrichtung oder einer Fördereinrichtung, welche wenigstens eine Komponente umfasst, die sich von einem Außenbereich au-ßerhalb des Behandlungsraumes durch den Spalt in den Behandlungsraum hinein erstreckt und entlang des Spaltes bewegbar ist;
c) einer Dichtungsanordnung, welche den Spalt in der Wand des Behandlungsraumes abgesehen von wenigstens einer Durchgangsöffnung abdichtet, durch welche sich die wenigstens eine Komponente hindurch erstreckt und welche einer Bewegung der wenigstens einen Komponente entlang des Spaltes folgt;
   wobei
d) die Dichtungsanordnung umfasst:
   da) ein erstes Dichtelement, welches sich am ersten Wandabschnitt entlang des Spaltes erstreckt und einen vom ersten Wandabschnitt abliegenden Koppelrand aufweist;
   db) ein zweites Dichtelement, welches sich am zweiten Wandabschnitt entlang des Spaltes erstreckt und einen vom zweiten Wandabschnitt abliegenden Koppelrand aufweist, der zum Koppelrand des ersten Dichtelements komplementär ist;
e) die Dichtungsanordnung derart eingerichtet ist, dass
   ea) die Koppelränder abgesehen von der Durchgangsöffnung miteinander gekoppelt sind;
   eb) die Koppelränder sich beim Bewegen der wenigstens einen Komponente in deren Bewegungsrichtung vor der Durchgangsöffnung voneinander trennen und in Bewegungsrichtung hinter der Durchgangsöffnung miteinander koppeln.

Eine solche Vorrichtung ist beispielsweise in der DE 25 21 506 A1 beschrieben.

Für die industrielle Behandlung von Gegenständen, insbesondere von Fahrzeugkarosserien oder von deren Teilen, bei der große Stückzahlen umgesetzt werden müssen, kommen bevorzugt Vorrichtungen dieser Art zum Einsatz, bei denen die Gegenstände mit Hilfe einer Fördereinrichtung kontinuierlich oder diskontinuierlich durch den Behandlungsraum geführt werden. Solche Vorrichtungen haben eine hohe Kapazität und lassen sich gut in eine Fertigungslinie eingliedern. Eine Behandlung kann beispielsweise ein Lackieren oder auch ein Trocknen sein.

Die Wände des Behandlungsraumes, worunter vorliegend sowohl Seitenwände als auch eine Bodenwand und eine Deckenwand verstanden werden sollen, trennen die Außenatmosphäre von der Innenatmosphäre des Behandlungsraumes und verhindern insbesondere ein Entweichen von gegebenenfalls appliziertem Behandlungsmedium und/oder von Wärme aus dem Behandlungsraum.

Bei der Wand mit dem Spalt kann es sich um eine solche Wand des Behandlungsraumes handeln. Es kann aber auch eine Wand eines Gehäuses einer sonstigen Baugruppe sein, welche in dem Behandlungsraum angeordnet ist. Beispielsweise kann die Wand zu dem Gehäuse einer Abdeckung für eine Führungsbahn gehören, auf der ein Applikationsroboter verfahren wird. Das Gehäuse deckt dann zum Beispiel auch Antriebskomponenten dieses Roboters ab, um diese vor dem Einfluss der Atmosphäre des Behandlungsraumes zu schützen.

Bei dem Behandlungsmedium kann es sich um eine Behandlungsflüssigkeit handeln, was beispielsweise beim Lackieren von Gegenständen oder bei Vorbereitungsprozessen für das Lackieren der Fall ist. Grundsätzlich können jedoch ohne weitere Maßnahmen auch Gase und Dämpfe aus dem Behandlungsraum entweichen, wie sie beispielsweise bei Trocknern oder Spritzkabinen vorhanden sein können. In Spritzkabinen sollen darüber hinaus z.B. auch Flüssigkeits- oder Pulvernebel von der Umgebung des Behandlungsraumes abgehalten werden.

Durch die Wände des Behandlungsraumes soll außerdem auch verhindert werden, dass Schmutz von außen in den Behandlungsraum eindringt.

Die Einrichtung, von der sich wenigstens eine Komponente durch den Spalt in der Wand in den Behandlungsraum erstreckt, kann beispielsweise eine Behandlungseinrichtung und in diesem Fall zum Beispiel ein mehrachsiger Applikationsroboter sein, wie es an und für sich bekannt ist. Ein solcher Roboter umfasst elektrische Leitungen und Fluidleitungen, die als Leitungsbündel von außen in den Behandlungsraum zum Roboterarm geführt werden und diesem bei einer Bewegung folgen. Der Roboterarm führt an dem Ende, das sich im Inneren des Behandlungsraumes befindet, eine Applikationseinrichtung, beispielsweise eine Spritzpistole oder einen Rotationszerstäuber.

Gegebenenfalls kann auch der Roboterarm selbst diejenige Komponenten sein, die sich von außerhalb des Behandlungsraumes durch den Spalt in den Behandlungsraum hinein erstreckt, während auf der anderen Seite der Wand die Antriebskomponenten des Roboters, zum Beispiel unter anderem ein parallel zur Wand verfahrbarer Schlitten mit entsprechenden Motoren, angeordnet ist.

Die Einrichtung, von der sich wenigstens eine Komponenten durch den Spalt in der Wand in den Behandlungsraum erstreckt, kann zum Beispiel auch eine Fördereinrichtung sein. Dabei wird besonders darauf geachtet, dass diejenigen Bauteile des Förderers, von denen möglicherweise Schmutzstoffe ausgehen können, insbesondere die Antriebskomponenten, au-ßerhalb des Behandlungsraumes angeordnet sind. Um die Gegenstände zu tragen, müssen in Betracht kommende Förderer einen Tragarm aufweisen, der die Wand des Behandlungsraumes durchdringt und an dessen im Behandlungsraum liegenden Ende die Gegenstände befestigt werden können. Hierfür ist der Spalt in der Wand des Behandlungsraumes vorhanden, der entlang des Bewegungsweges des Förderers verläuft und abgesehen von der gesonderten Dichtungsanordnung verschlossen wird. Bei einer solchen Fördereinrichtung ist dann also der Tragarm die oben definierte Komponente, die sich von außerhalb des Behandlungsraumes durch den Spalt in den Behandlungsraum hinein erstreckt und entlang des Spaltes bewegbar ist.

Bei bekannten Vorrichtungen der eingangs genannten Art, bei welchen sich die Dichtungsanordnung entsprechend im Bereich des Tragarmes lokal öffnen kann, werden als Dichtungsanordnungen häufig elastische Dichtlippen verwendet, welche den Tragarm von zwei gegenüberliegenden Seiten umschließen und die dort, wo sich der Tragarm der Fördereinrichtung nicht befindet, an benachbarten Längsrändern lose aneinander anstoßen sollen.

Die Verlässlichkeit solcher Dichtlippen ist jedoch nicht immer gewährleistet. Insbesondere kommt es vor, dass dort, wo sich der Tragarm nicht befindet, zwischen den Dichtlippen Zwischenräume verbleiben, durch welche unerwünschte Verunreinigungen in den Behandlungsraum hinein oder die Atmosphäre aus dem Behandlungsraum nach außen gelangen können.

Eine andere derartige Behandlungsvorrichtung ist in der DE 198 48 946 C2 beschrieben. Bei dieser umfasst die Dichtungsanordnung eine Mehrzahl von nebeneinander angeordneten, segmentartigen Dichtelementen, die sich in seitlicher Richtung überlappen und zur Passage eines Tragarmes einer Fördereinrichtung um Schenkachsen verschwenkt werden. Diese Lösung ist jedoch mechanisch sehr aufwendig. Aus der DE 192 49 243 B1 ist bekannt, stattdessen zur Abdichtung des Tragarmes einer Fördereinrichtung elastisch verbiegbare Federlamellen zu verwenden. Aber auch dort ist der bauliche Aufwand durch die Vielzahl an Einzelteilen recht hoch.

Unter dem Begriff dichten ist vorliegend nicht zwingend eine hermetische Abdichtung der benachbarten Bereiche zu verstehen. Ziel ist es, den Spalt bis auf eine akzeptable Restdurchlässigkeit abzudichten, die von Anlage zu Anlage unterschiedlichen ausfallen kann. Gegebenenfalls kann der Außenbereich mit einem Überdruck beaufschlagt sein, so dass ein Austreten von Atmosphäre des Behandlungsraums nach außen durch die Dichtungsanordnung erschwert ist.

Aufgabe der vorliegenden Erfindung ist es, eine Vorrichtung der eingangs genannten Art so auszugestalten, dass der Spalt zwischen den beiden Abschnitten der Wand zuverlässig abgedichtet ist und die Dichtungsanordnung wartungsarm und zuverlässig ist.

Diese Aufgabe wird bei einer Vorrichtung der eingangs genannten Art dadurch gelöst, dass
f) die Dichtungsanordnung eine Abdeckeinrichtung umfasst, durch welche die Koppelränder im Behandlungsraum geschützt sind;
g) die Abdeckeinrichtung an jedem Dichtelement ein Abdeckband umfasst, welche sich jeweils über den zugehörigen Koppelrand erstrecken und derart angeordnet und dimensioniert sind, dass sie im Bereich der miteinander gekoppelten Koppelränder überlappen.

So werden mögliche belastende Einflüsse durch die Atmosphäre im Behandlungsraum gegen die Koppelränder zu verringert.

Erfindungsgemäß werden folglich Dichtelemente verwendet, die anders als bei den oben erläuterten Dichtlippen in den Abschnitten, in denen sich die Durchgangsöffnung nicht befindet, miteinander verbunden sind. Hierdurch wird verhindert, dass sich dort unerwünschte Spalte bilden können, wie es bei lose aneinander anliegenden Dichtlippen der Fall sein kann.

Vorzugsweise umfasst die Dichtungsanordnung ein erstes und ein zweites Schiebelement, mit deren Hilfe die Koppelränder abhängig von der Bewegungsrichtung in Eingriff ineinander gebracht oder voneinander getrennt werden können, wobei die Durchgangsöffnung zwischen den Schiebelementen verbleibt.

Wenn die Koppelränder zueinander komplementäre Zahnreihen aufweisen, die abhängig von der Bewegungsrichtung in Eingriff ineinander bringbar oder voneinander trennbar sind, kann die Dichtungsanordnung vorteilhaft nach Art eines Reißverschlusses ausgebildet sein.

Alternativ ist es günstig, wenn die Koppelränder zueinander komplementäre Reißstreifen aufweisen, die ein Nut/Federsystem bilden.

Wenn die Reißstreifen dabei jeweils eine Doppelnut und eine Doppelfeder umfassen, ist in den Abschnitten, in denen die Koppelränder miteinander gekoppelt sind, eine hohe Dichtigkeit möglich.

Eine sichere Führung der durch den Spalt tretenden Komponente ist gewährleistet, wenn die Dichtungsanordnung einen Gleitkörper umfasst, der in der Durchgangsöffnung angeordnet ist und die wenigstens eine Komponente der Einrichtung aufnimmt.

Damit die Bewegung des Gleitkörpers und der Koppel- bzw. Entkoppelvorgang bei den Koppelrändern aufeinander abgestimmt erfolgen kann, ist es günstig, wenn der Gleitkörper in Bewegungsrichtung zu beiden Seiten mit den Schiebeelementen verbunden ist. Diese Verbindung kann auch einstückig sein; in diesem Fall sind die Schiebeelemente folglich in den Gleitkörper integriert.

Vorteilhaft hat der Gleitkörper in der Ebene der Dichtungsanordnung einen linsenförmigen Querschnitt. Auf diese Weise werden die Koppelränder bei einer Bewegung des Gleitkörpers zunächst voneinander weg und dann wieder aufeinander zu geführt, wodurch die Durchgangsöffnung erzeugt wird, die in diesem Fall der Kontur des Gleitkörpers folgt.

Vorzugsweise weist der Gleitkörper an seinen den Koppelrändern zugewandten Außenrändern jeweils eine Nut auf, in welcher die Koppelränder bei einer Bewegung des Gleitkörpers geführt sind. Auf diese Weise ist ein Ausbrechen der Koppelränder in eine zur Bewegungsrichtung senkrechte Richtung verhindert.

Nachstehend werden Ausführungsbeispiele der Erfindung anhand der Zeichnungen näher erläutert. In diesen zeigen:
- Figur 1: perspektivisch einen Ausschnitt einer Lackierkabine mit einer teilweise weggebrochenen Wand, wobei ein Leitungsbündel zur Versorgung eines Lackierroboters durch die Wand und eine Durchgangsöffnung einer Dichtungsanordnung geführt ist, der in der Lackierkabine verfahren werden kann und in einer ersten Endposition auf seinem Bewegungsweg gezeigt ist;
- Figur 2: eine der Figur 1 entsprechende perspektivische Ansicht der Lackierkabine mit dem Lackierroboter in seiner zweiten Endposition auf seinem Bewegungsweg;
- Figur 3: eine Draufsicht auf einen Ausschnitt der Dichtungsanordnung im Bereich der Durchgangsöffnung;
- Figur 4: eine der Figur 3 entsprechende Draufsicht auf einen Ausschnitt einer abgewandelten Dichtungsanordnung im Bereich der Durchgangsöffnung;
- Figur 5: eine der Figur 3 entsprechende Draufsicht auf einen Ausschnitt einer nochmals abgewandelten Dichtungsanordnung im Bereich der Durchgangsöffnung;
- Figur 6: einen Schnitt der Dichtungsanordnung von Figur 5 gemäß der dortigen Schnittlinie VI-VI in größerem Maßstab;
- Figur 7: einen Schnitt der Dichtungsanordnung von Figur 5 gemäß der dortigen Schnittlinie VII-VII ebenfalls in größerem Maßstab;
- Figur 8: einen der Figur 7 entsprechenden Schnitt einer nochmals abgewandelten Dichtungsanordnung;
- Figur 9: eine der Figur 1 entsprechende perspektivische Ansicht der Lackierkabine mit einer Dichtungsanordnung, die für zwei oder mehr Lackierroboter ausgelegt ist, die in Längsrichtung der Lackierkabine hintereinander angeordnet bewegt werden können;
- Figur 10: eine der Figur 9 entsprechende perspektivische Ansicht der Lackierkabine mit einer nochmals abgewandelten Dichtungsanordnung für zwei oder mehr Lackierroboter;
- Figur 11: eine der Figur 1 ähnliche perspektivische Ansicht einer Lackierkabine, wobei stark vereinfacht eine mögliche Bogenfahrt am Beispiel einer Fördereinrichtung veranschaulicht ist.

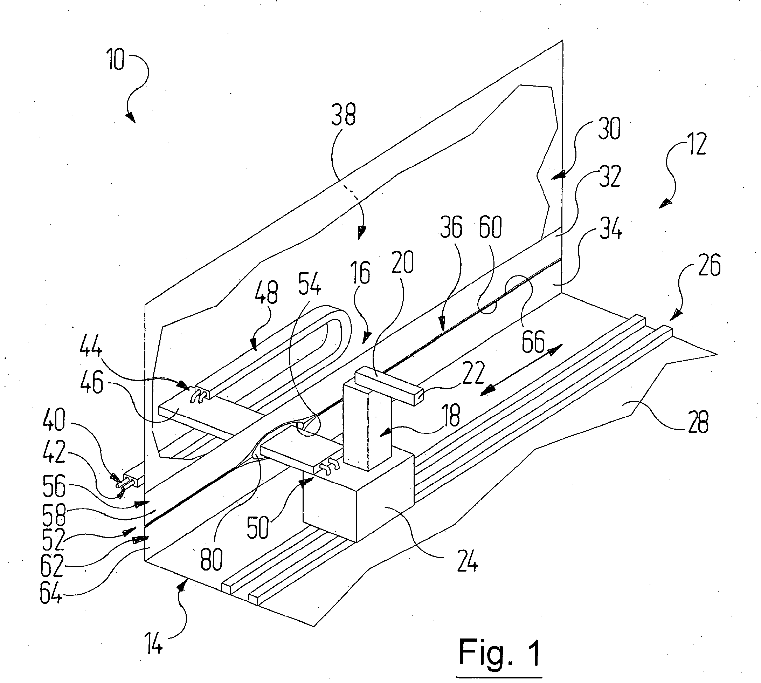

In Figur 1 ist mit 10 insgesamt eine Vorrichtung zum Behandeln von Gegenständen bezeichnet, welche einen Behandlungsraum 12 umfasst. Beim vorliegenden Ausführungsbeispiel gehört der Behandlungsraum 12 zu einer Lackierkabine 14, in welcher Gegenstände lackiert werden und von welcher lediglich ein Ausschnitt gezeigt ist.

In dem Behandlungsraum 12 ist eine Behandlungseinrichtung 16 angeordnet, die beim vorliegenden Ausführungsbeispiel durch einen stark schematisch dargestellten, mehrachsigen Lackierroboter 18 gebildet ist, wie er an und für sich bekannt ist. Der Lackierroboter 18 umfasst einen Roboterarm 20, der an seinem freien Ende eine Applikationseinrichtung 22 führt, bei der es sich beispielsweise um eine Spritzpistole oder einen Rotationszerstäuber handeln kann.

Der Roboterarm 20 ist auf einem Schlitten 24 angeordnet, der auf Schienen 26 in dem Behandlungsraum 12 verfahren werden kann und zu diesem Zweck in bekannter Art und Weise Antriebskomponenten mit sich führt, die hier nicht gesondert gezeigt sind.

Der Behandlungsraum 12 ist durch Wände begrenzt, von denen eine Bodenwand 28 und eine vertikale Seitenwand 30 zu erkennen sind. Die Seitenwand 30 hat einen ersten, beim vorliegenden Ausführungsbeispiel oberen Wandabschnitt 32 und einen zweiten, beim vorliegenden Ausführungsbeispiel unteren Wandabschnitt 34, die durch einen horizontal verlaufenden Spalt 36 voneinander getrennt sind.

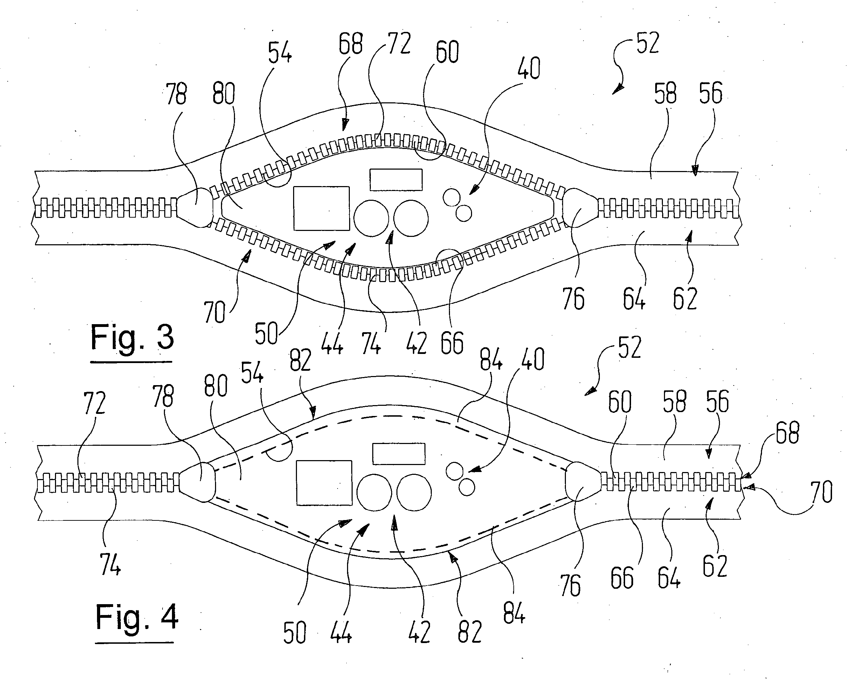

Auf der vom Behandlungsraum 12 abliegenden Seite der Seitenwand 30 befindet sich ein Außenbereich 38 außerhalb des Behandlungsraums 12 der Lackierkabine 14, von dem aus der Lackierroboter 18 mit Betriebsmitteln wie elektrischer Energie, fluiden Medien und dergleichen versorgt wird, die zum Betrieb des Lackierroboters 18 und zum Lackieren der Gegenstände notwendig sind. Hierfür werden Versorgungsleitungen zu dem Lackierroboter 18 geführt, von denen in den Figuren 3, 4 und 5 exemplarisch zwei elektrische Leitungen 40 und zwei Fluidleitungen 42 mit Bezugszeichen versehen sind.

Die Leitungen 40 und 42 sind Teil eines insgesamt mit 44 bezeichneten Leitungsbündels des Lackierroboters 18, welches auch noch nicht eigens bezeichnete weitere Versorgungsleitungen umfassen kann. Das Leitungsbündel 44 erstreckt sich von dem Außenbereich 38 durch den Spalt 36 in den Behandlungsraum 12 hinein und führt zu dem Lackierroboter 18. Das Leitungsbündel 44 umfasst beim vorliegenden Ausführungsbeispiel eine rohrähnliche Hülle 46, es kann jedoch auch ohne eine solche Hülle 46 durch die einzelnen Leitungen 40, 42 und weitere Bauteile gebildet sein, wie es in den Figuren 3 bis 6 erkennbar ist. Im Außenbereich 38 werden die Leitungen 40, 42 mit Hilfe einer an und für sich bekannten und beweglichen Schleppeinrichtung 48 zu der Hülle 46 geführt.

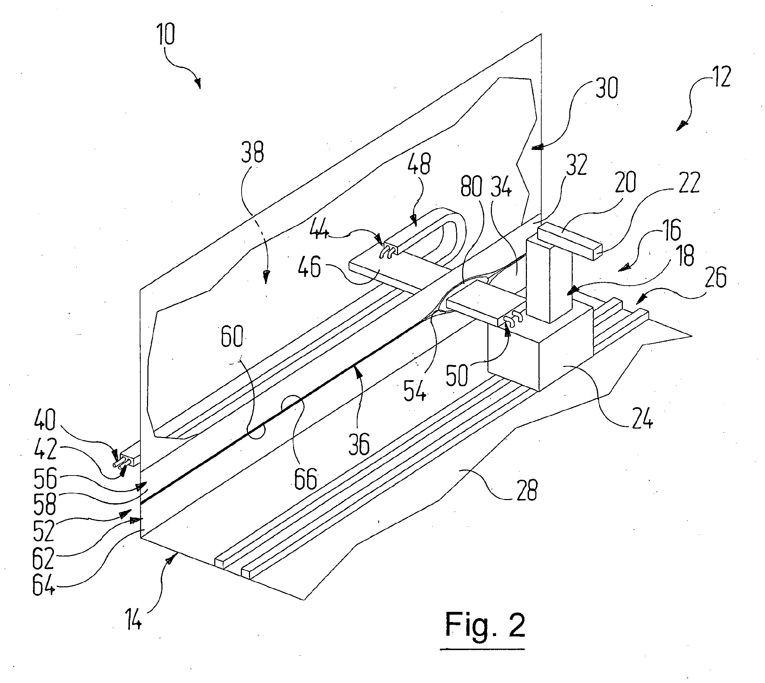

Das Leitungsbündel 44 kann sich entlang des Spaltes 36 bewegen und der Bewegung des Lackierroboters 18 folgen. Die Schienen 26 im Behandlungsraum 12 geben dem Lackierroboter 18 dabei einen Bewegungsweg vor, auf dem sich dieser zwischen einer ersten Endposition, die in Figur 1 gezeigt ist, und einer zweiten Endposition, die in Figur 2 gezeigt ist, bewegen kann.

Allgemein ausgedrückt bildet beim vorliegenden Ausführungsbeispiel das Leitungsbündel 44 eine Komponente 50, die sich von außerhalb des Behandlungsraumes 12 durch den Spalt 36 in den Behandlungsraum 12 hinein erstreckt und entlang des Spaltes 36 bewegbar ist.

Wie eingangs erläutert, soll weitgehend verhindert werden, dass Atmosphäre aus dem Behandlungsraum 12 in den Außenbereich 38 oder aus diesem in den Behandlungsraum 12 gelangt. Aus diesem Grund ist eine Dichtungsanordnung 52 vorhanden, welche den Spalt 36 in der Wand 30 des Behandlungsraumes 12 abgesehen von einer Durchgangsöffnung 54 abdichtet, durch welche sich das Leitungsbündel 44 hindurch erstreckt und welche einer Bewegung des Leitungsbündels 44 entlang des Spaltes 36 folgt.

Die Dichtungsanordnung 52 umfasst ein erstes Dichtelement 56 in Form eines ersten Dichtbandes 58, welches sich am oberen Wandabschnitt 32 entlang des Spaltes 36 erstreckt und einen vom oberen Wandabschnitt 32 abliegenden Koppelrand 60 aufweist. Außerdem umfasst die Dichtungsanordnung 52 ein zweites Dichtelement 62 in Form eines zweiten Dichtbandes 64, welches sich am zweiten Wandabschnitt 34 entlang des Spaltes 36 erstreckt und einen vom zweiten Wandabschnitt 34 abliegenden Koppelrand 66 aufweist, der zum Koppelrand 60 des ersten Dichtelements 56 komplementär ist.

Das Leitungsbündel 44 erstreckt sich durch die Durchgangsöffnung 54 und die Koppelränder 60 und 66 sind abgesehen von der Durchgangsöffnung 54 miteinander gekoppelt. Wenn das Leitungsbündel 44 sich im Spalt 36 bewegt, koppeln die Koppelränder 60 und 66 in Bewegungsrichtung hinter dem Leitungsbündel 44 miteinander und trennen sich in Bewegungsrichtung vor dem Leitungsbündel 44 voneinander. Die Bewegungsrichtung ist nur in Figur 1 als Doppelpfeil veranschaulicht.

Wie in Figur 3 veranschaulicht, ist dies beim vorliegenden Ausführungsbeispiel dadurch ermöglicht, dass die Koppelränder 60, 66 nach Art eines Reißverschlusses zueinander komplementäre Zahnreihen 68 bzw. 70 mit Zähnen 72 bzw. 74 aufweisen. Mit Hilfe eines ersten Schiebeelements 76 und eines zweiten Schiebeelementes 78 können die Koppelränder 66, 66 abhängig von der Bewegungsrichtung in Eingriff ineinander gebracht oder voneinander getrennt werden. Die Durchgangsöffnung 54 für das Leitungsbündel 44 verbleibt dabei zwischen den beiden Schiebeelementen 76 und 78.

Außerdem umfasst die Dichtungsanordnung 52 einen Gleitkörper 80, der in der Durchgangsöffnung 54 angeordnet ist und das Leitungsbündel 44 aufnimmt. Der Gleitkörper 80 ist in Bewegungsrichtung zu beiden Seiten mit den Schiebeelementen 76 und 78 verbunden und hat in der Ebene der Dichtungsanordnung 52 einen linsenförmigen Querschnitt, so dass die Koppelränder 60, 66 bei einer Bewegung des Gleitkörpers 80 zunächst voneinander weg und dann wieder aufeinander zu laufen.

Bei einer in Figur 4 gezeigten Abwandlung ist der Gleitkörper 80 einstückig mit den Schiebelementen 76 und 78 verbunden. Außerdem weist der Gleitkörper 80 an seinen den Koppelrändern 60 und 66, d.h. beim vorliegenden Ausführungsbeispiel den Zahnreihen 68 und 70, zugewandten Außenrändern 82 jeweils eine Nut 84, in welcher die Koppelränder 60, 66 bei einer Bewegung des Gleitkörpers 80 geführt sind. Eine solche Nut 84 kann auch vorhanden sein, wenn die Schiebeelemente 76, 78 nicht einstückig mit dem Gleitkörper 80 verbunden sind.

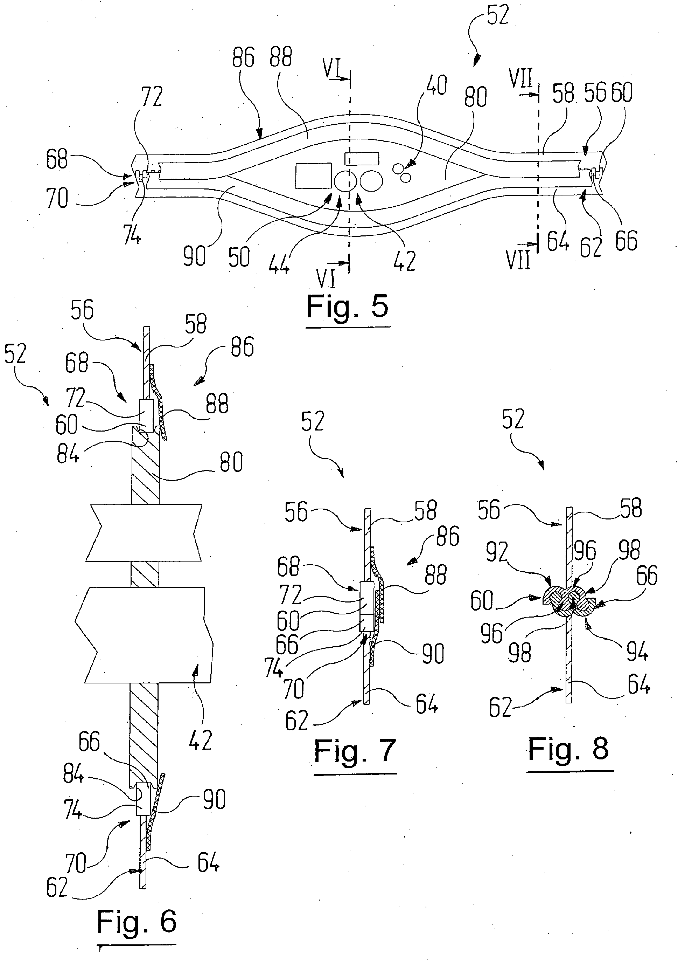

In den Figuren 5 bis 7 ist eine ergänzte Dichtanordnung 52 gezeigt, bei der die Zahnreihen 68 und 70 im Behandlungsraum 12 durch eine Abdeckeinrichtung 86 geschützt sind. Hierzu ist an jedem Dichtband 58, 64 ein Abdeckband 88, 90 befestigt, welche sich jeweils über die zugehörige Zahnreihe 68 bzw. erstrecken und derart angeordnet und dimensioniert sind, dass sie im Bereich der miteinander gekoppelten Zahnreihen 68, 70 überlappen. Dies ist in den Figuren 5 und 7 gut zu erkennen. Die Abdeckbänder 88, 90 können neben der mechanischen Schutzwirkung auch dichtende Eigenschaften haben und so zusätzlich zur Gesamtdichtigkeit der Dichtungsanordnung 52 beitragen.

In Figur 8 ist als weiteres Ausführungsbeispiel eine Dichtungsanordnung 52 gezeigt, bei welcher die Koppelränder 60 und 66 jeweils keine Zahnreihe, sondern zueinander komplementäre Reißstreifen 92 und 94 haben, die ein Nut/Federsystem bilden. Die Reißstreifen 92 und 94 sind im Querschnitt M-förmig und haben so jeweils eine Doppelnut 96, in welche eine Doppelfeder 98 des jeweils anderen Reißstreifens 92 bzw. 94 eingreifen kann. Die Schiebeelement 76 und 78 passen entsprechend zu den Reißstreifen 92, 94.

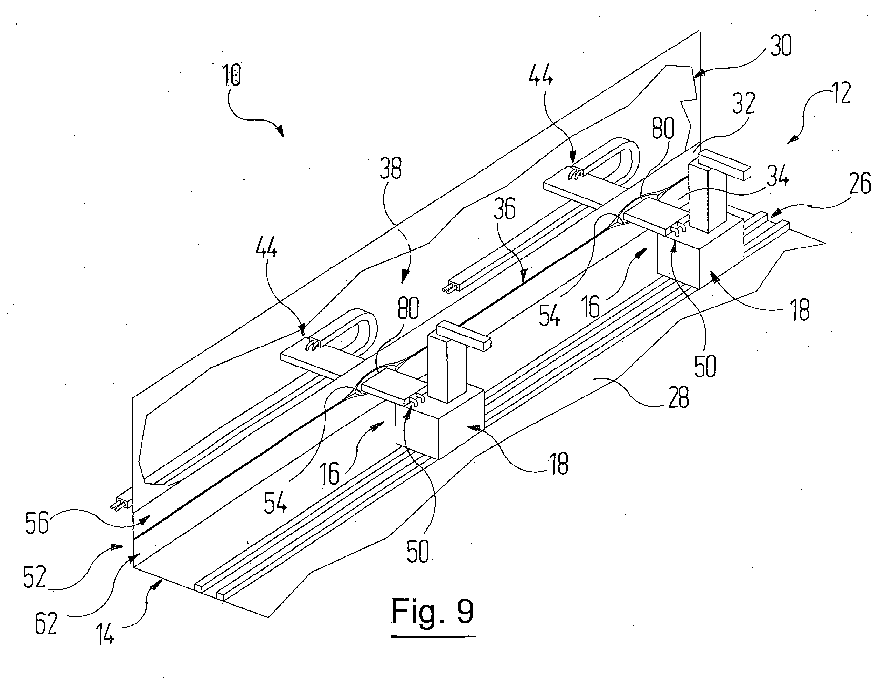

Bei den nachfolgend erläuterten Figuren 9, 10 und 11 sind der Einfachheit halber nicht alle oben erläuterten Komponenten mit einem Bezugszeichen versehen.

Wie in Figur 9 zu erkennen ist, können auch Lackierroboter 18, d.h. also zwei Behandlungseinrichtungen 16, in dem Behandlungsraum 12 angeordnet sein. In diesem Fall kann die Dichtungsanordnung 52 auch zwei Durchgangsöffnungen 54 aufweisen, durch welche jeweils ein Leitungsbündel 44 hindurchtritt.

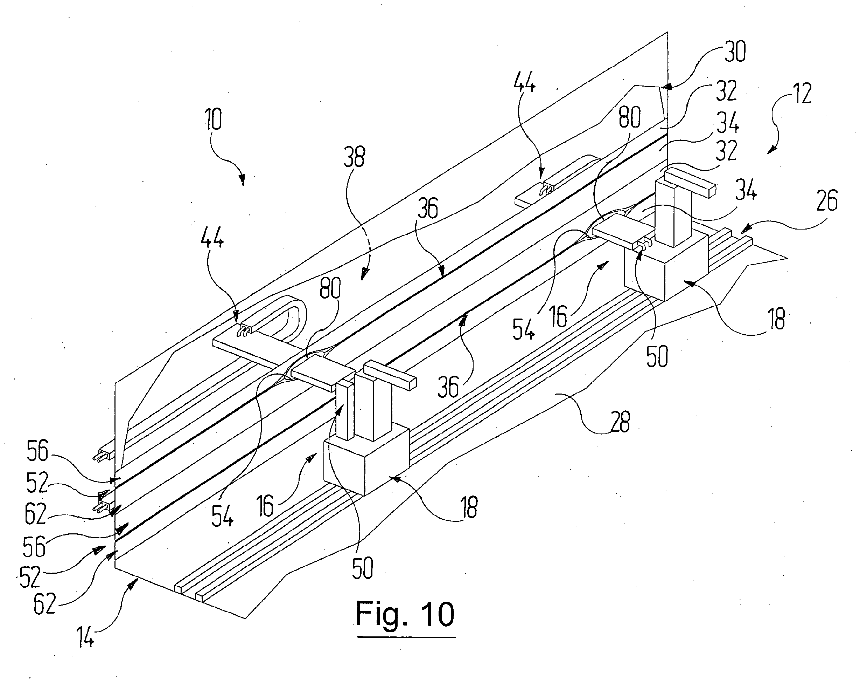

Wie Figur 10 zeigt, können alternativ auch zwei Dichtungsanordnungen 52 mit jeweils nur einer Durchgangsöffnung 54 vorhanden sein, die beim in Figur 10 gezeigten Ausführungsbeispiel auf unterschiedlichen Höhenniveaus angesiedelt sind. Dort hat die Wand entsprechend zwei Spalte 36.

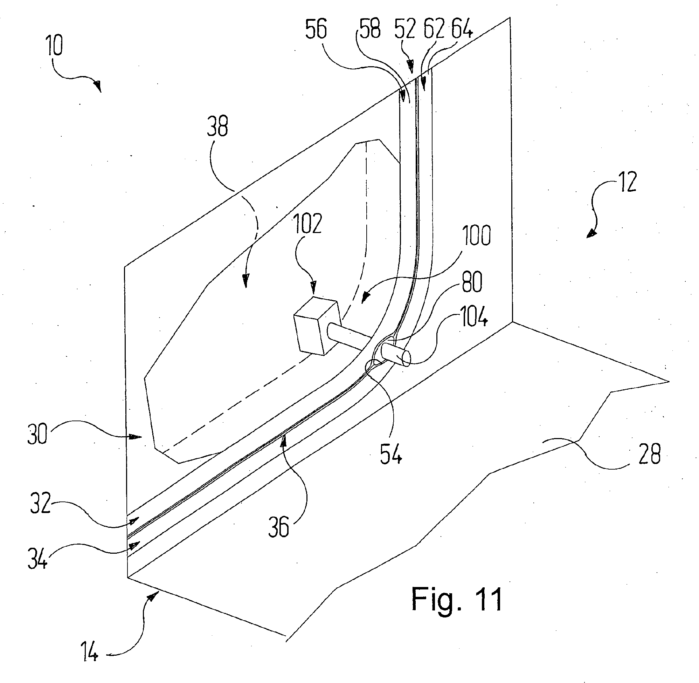

In Figur 11 ist veranschaulicht, dass mit Hilfe der Dichtungsanordnung 52 auch eine Kurvenführung einer Komponente möglich ist, die sich von dem Außenbereich 38 durch den Spalt 36 und die Dichtungsanordnung 52 in den Behandlungsraum 12 hinein erstreckt. Der Spalt 36 verläuft dann in einem Bogen, dem die Dichtelemente 56 und 62 folgen.

Dies ist in Figur 11 anhand einer Fördereinrichtung 100 gezeigt, bei der schematisch als kompakter Block veranschaulichte Antriebskomponenten 102 im Außenbereich 38 angeordnet sind und sich ein Tragarm 104 durch den Spalt 36 in der Wand 30 und die Dichtungsanordnung 52 hindurch in den Behandlungsraum 12 hinein erstreckt. Der Gleitkörper 80 nimmt diesen Tragarm 104 in der Durchgangsöffnung 54 auf. Bei einer Fördereinrichtung 100 kann der Spalt 36 natürlich auch geradlinig verlaufen.

Am Ende des Tragarmes 104, das sich im Behandlungsraum 12 befindet, ist eine nicht eigens gezeigte Befestigungseinrichtung für die zu fördernden Gegenstände angebracht. Mit Hilfe der Fördereinrichtung 100 können die Gegenstände beispielsweise durch Tauchbecken im Behandlungsraum 12 hindurch oder an Lackierrobotern 18 vorbei gefördert werden. Bei einer derartigen Fördereinrichtung 100 ist der Tragarm 104 diejenige Komponente, die sich durch die Durchgangsöffnung 54 der Dichtungsanordnung 52 hindurch erstreckt, die ihrerseits einer Bewegung des Tragarmes 104 entlang des Spaltes 36 folgt.

## Patentansprüche

1. Vorrichtung zum Behandeln von Gegenständen mit
a) einem Behandlungsraum (12), bei welchem eine Wand (30) mit einem ersten Wandabschnitt (32) und einem zweiten Wandabschnitt (34) vorhanden ist, zwischen denen ein in der Wand (30) verlaufender Spalt (36) ausgebildet ist;
b) einer Einrichtung (16; 100), insbesondere einer Behandlungseinrichtung (16) oder einer Fördereinrichtung (100), welche wenigstens eine Komponente (44; 104) umfasst, die sich von einem Außenbereich (38) außerhalb des Behandlungsraumes (12) durch den Spalt (36) in den Behandlungsraum (12) hinein erstreckt und entlang des Spaltes (36) bewegbar ist;
c) einer Dichtungsanordnung (52), welche den Spalt (36) in der Wand (30) des Behandlungsraumes (12) abgesehen von wenigstens einer Durchgangsöffnung (54) abdichtet, durch welche sich die wenigstens eine Komponente (44; 104) hindurch erstreckt und welche einer Bewegung der wenigstens einen Komponente (44; 104) entlang des Spaltes (36) folgt,
wobei
d) die Dichtungsanordnung (52) umfasst:
da) ein erstes Dichtelement (56), welches sich am ersten Wandabschnitt (32) entlang des Spaltes (36) erstreckt und einen vom ersten Wandabschnitt (32) abliegenden Koppelrand (60) aufweist;
db) ein zweites Dichtelement (62), welches sich am zweiten Wandabschnitt (34) entlang des Spaltes (36) erstreckt und einen vom zweiten Wandabschnitt (34) abliegenden Koppelrand (66) aufweist, der zum Koppelrand (60) des ersten Dichtelements (56) komplementär ist;
e) die Dichtungsanordnung (52) derart eingerichtet ist, dass
ea) die Koppelränder (60, 66) abgesehen von der Durchgangsöffnung (54) miteinander gekoppelt sind;
eb) die Koppelränder (60, 66) sich beim Bewegen der wenigstens einen Komponente (44; 104) in deren Bewegungsrichtung vor der Durchgangsöffnung (54) voneinander trennen und in Bewegungsrichtung hinter der Durchgangsöffnung (54) miteinander koppeln,
**dadurch gekennzeichnet, dass**
f) die Dichtungsanordnung (52) eine Abdeckeinrichtung (86) umfasst, durch welche die Koppelränder (60, 66) im Behandlungsraum (12) geschützt sind.
g) die Abdeckeinrichtung (86) an jedem Dichtelement (56, 62) ein Abdeckband (88, 90) umfasst, welche sich jeweils über den zugehörigen Koppelrand (60, 66) erstrecken und derart angeordnet und dimensioniert sind, dass sie im Bereich der miteinander gekoppelten Koppelränder (60, 66) überlappen.

2. Vorrichtung nach einem der Ansprüche 1, **dadurch gekennzeichnet, dass** die Dichtungsanordnung (52) ein erstes und ein zweites Schiebelement (76, 78) umfasst, mit deren Hilfe die Koppelränder (60, 66) abhängig von der Bewegungsrichtung in Eingriff ineinander gebracht oder voneinander getrennt werden können, wobei die Durchgangsöffnung (54) zwischen den Schiebelementen (76, 78) verbleibt.

3. Vorrichtung nach Anspruch 1 oder 2, **dadurch gekennzeichnet, dass** die Koppelränder (60, 66) zueinander komplementäre Zahnreihen (68, 70) aufweisen, die abhängig von der Bewegungsrichtung in Eingriff ineinander bringbar oder voneinander trennbar sind.

4. Vorrichtung nach Anspruch 1 oder 2, **dadurch gekennzeichnet, dass** die Koppelränder (60, 66) zueinander komplementäre Reißstreifen (92, 94) aufweisen, die ein Nut/ Federsystem bilden.

5. Vorrichtung nach Anspruch 4, **dadurch gekennzeichnet, dass** die Reißstreifen (92, 94) jeweils eine Doppelnut (96) und eine Doppelfeder (98) umfassen.

6. Vorrichtung nach einem der Ansprüche 1 bis 5, **dadurch gekennzeichnet, dass** die Dichtungsanordnung (52) einen Gleitkörper (80) umfasst, der in der Durchgangsöffnung (54) angeordnet ist und die wenigstens eine Komponente (44; 104) der Einrichtung (16; 100) aufnimmt.

7. Vorrichtung nach Anspruch 6 unter Rückbezug auf Anspruch 2, **dadurch gekennzeichnet, dass** der Gleitkörper (80) in Bewegungsrichtung zu beiden Seiten mit den Schiebeelementen (76, 78) verbunden ist.

8. Vorrichtung nach Anspruch 7, **dadurch gekennzeichnet, dass** der Gleitkörper (80) in der Ebene der Dichtungsanordnung (52) einen linsenförmigen Querschnitt hat.

9. Vorrichtung nach einem der Ansprüche 6 bis 8, **dadurch gekennzeichnet, dass** der Gleitkörper (80) an seinen den Koppelrändern (60, 66) zugewandten Außenrändern (82) jeweils eine Nut (84) aufweist, in welcher die Koppelränder (60, 66) bei einer Bewegung des Gleitkörpers (80) geführt sind.

## Claims

1. Device for treating objects comprising:
a) a treatment chamber (12), in which there is a wall (30) with a first wall portion (32) and a second wall portion (34), between which a gap (36) extending in the wall (30) is formed;
b) an apparatus (16; 100), in particular a treatment apparatus (16) or a conveying apparatus (100), which comprises at least one component (44; 104), which extends from an outside region (38) outside the treatment chamber (12) through the gap (36) into the treatment chamber (12) and which can be moved along the gap (36);
c) a sealing arrangement (52), which seals the gap (36) in the wall (30) of the treatment chamber (12) except for at least one through opening (54) through which the at least one component (44; 104) extends and which follows a movement of the at least one component (44; 104) along the gap (36),
wherein
d) the sealing arrangement (52) comprises:
da) a first sealing element (56), which extends on the first wall portion (32) along the gap (36) and has a coupling edge (60) which is remote from the first wall portion (32);
db) a second sealing element (62), which extends on the second wall portion (34) along the gap (36) and has a coupling edge (66) which is remote from the second wall portion (34) and is complementary to the coupling edge (60) of the first sealing element (56);
e) the sealing arrangement (52) is configured such that
ea) the coupling edges (60, 66) are coupled to one another except for the through opening (54);
eb) during the movement of the at least one component (44; 104), the coupling edges (60, 66) separate from one another before the through opening (54) in the movement direction of the component (44; 104) and couple to one another after the through opening (54) in the movement direction,
**characterized in that**
f) the sealing arrangement (52) comprises a cover means (86), with which the coupling edges (60, 66) are protected in the treatment chamber (12);
g) the cover means (86) comprises a cover strip (88, 90) on each sealing element (56, 62), which cover strips (88, 90) extend over the associated coupling edge (60, 66) in each case and are arranged and dimensioned such that they overlap in the region of the mutually coupled coupling edges (60, 66).

2. Device according to claim 1, **characterized in that** the sealing arrangement (52) comprises a first and a second slide element (76, 78), with the aid of which the coupling edges (60, 66) can be brought into engagement with one another or separated from one another depending on the movement direction, wherein the through opening (54) remains between the slide elements (76, 78).

3. Device according to claims 1 or 2, **characterized in that** the coupling edges (60, 66) have mutually complementary rows of teeth (68, 70), which can be brought into engagement with one another or separated from one another depending on the movement direction.

4. Device according to claims 1 or 2, **characterized in that** the coupling edges (60, 66) have mutually complementary tear strips (92, 94), which form a tongue and groove system.

5. Device according to claim 4, **characterized in that** the tear strips (92, 94) each comprise a double groove (96) and a double tongue (98).

6. Device according to any one of claims 1 to 5, **characterized in that** the sealing arrangement (52) comprises a sliding body (80), which is arranged in the through opening (54) and which receives at least one component (44; 104) of the apparatus (16; 100).

7. Device according to claim 6, in reference to claim 2, **characterized in that** the sliding body (80) is connected to the slide element (76, 78) on both sides in the movement direction.

8. Device according to claim 7, **characterized in that** the sliding body (80) has a lenticular cross-section in the plane of the sealing arrangement (52).

9. Device according to any one of claims 6 to 8, **characterized in that** on its outside edges (82) facing the coupling edges (60, 66), the sliding body (80) has a respective groove (84) in which the coupling edges (60, 66) are guided during a movement of the sliding body (80).

## Revendications

1. Dispositif dévolu au traitement d'objets, comprenant
a) une chambre de traitement (12), pourvue d'une paroi (30) incluant une première région (32) et une seconde région (34) entre lesquelles est ménagée une fente (36) s'étendant dans ladite paroi (30) ;
b) un appareil (16 ; 100), en particulier un appareil de traitement (16) ou un appareil de convoyage (100) muni d'au moins un élément structurel (44 ; 104) qui pénètre dans la chambre de traitement (12) à travers la fente (36), à partir d'une zone extérieure (38) située en dehors de ladite chambre de traitement (12), et peut être mû le long de ladite fente (36) ;
c) un ensemble d'étanchement (52) qui assure l'étanchéité de la fente (36) pratiquée dans la paroi (30) de ladite chambre de traitement (12), abstraction faite d'au moins un orifice de passage (54), est traversé par l'élément structurel (44 ; 104) à présence minimale et accompagne un mouvement dudit élément structurel (44 ; 104), à présence minimale, le long de ladite fente (36), sachant que
d) l'ensemble d'étanchement (52) englobe :
da) un premier élément d'étanchement (56) qui s'étend sur la première région (32) de la paroi, le long de la fente (36), et est doté d'un bord de couplage (60) dépassant au-delà de ladite première région (32) de la paroi ;
db) un second élément d'étanchement (62) qui s'étend sur la seconde région (34) de la paroi, le long de ladite fente (36), et est pourvu d'un bord de couplage (66) dépassant au-delà de ladite seconde région (34) de la paroi, et complémentaire dudit bord de couplage (60) du premier élément d'étanchement (56) ;
e) ledit ensemble d'étanchement (52) est agencé de façon telle que
ea) les bords de couplage (60, 66) soient couplés l'un à l'autre, abstraction faite de l'orifice de passage (54) ;
eb) lesdits bords de couplage (60, 66) se dissocient l'un de l'autre au cours du mouvement de l'élément structurel (44 ; 104) à présence minimale, dans la direction de mouvement de ce dernier devant l'orifice de passage (54), et se couplent l'un à l'autre dans la direction de mouvement derrière ledit orifice de passage (54),
**caractérisé par le fait que**
f) l'ensemble d'étanchement (52) est muni d'un système de recouvrement (86) par lequel les bords de couplage (60, 66) sont protégés dans la chambre de traitement (12),
g) ledit système de recouvrement (86) comporte une bande de recouvrement (88, 90) sur chaque élément d'étanchement (56, 62), lesdites bandes s'étendant, à chaque fois, au-dessus du bord de couplage (60, 66) associé, et étant disposées et dimensionnées de telle sorte qu'elles se chevauchent dans la région des bords de couplage (60, 66) couplés l'un à l'autre.

2. Dispositif selon l'une des revendications 1, **caractérisé par le fait que** l'ensemble d'étanchement (52) inclut des premier et second éléments coulissants (76, 78) à l'aide desquels les bords de couplage (60, 66) peuvent être mis en prise l'un dans l'autre ou dissociés l'un de l'autre, en fonction de la direction de mouvement, sachant que l'orifice de passage (54) subsiste entre lesdits éléments coulissants (76, 78).

3. Dispositif selon la revendication 1 ou 2, **caractérisé par le fait que** les bords de couplage (60, 66) comportent des rangées de dents (68, 70) complémentaires, qui peuvent être mises en prise les unes dans les autres ou dissociées les unes des autres, en fonction de la direction de mouvement.

4. Dispositif selon la revendication 1 ou 2, **caractérisé par le fait que** les bords de couplage (60, 66) comportent des bandes arrachables (92, 94) complémentaires, qui forment un système à rainures et languettes.

5. Dispositif selon la revendication 4, **caractérisé par le fait que** les bandes arrachables (92, 94) sont pourvues, à chaque fois, d'une rainure double (96) et d'une languette double (98).

6. Dispositif selon l'une des revendications 1 à 5, **caractérisé par le fait que** l'ensemble d'étanchement (52) est doté d'un curseur (80) logé dans l'orifice de passage (54) et recevant l'élément structurel (44 ; 104), à présence minimale dans l'appareil (16 ; 100).

7. Dispositif selon la revendication 6 rattachée à la revendication 2, **caractérisé par le fait que** le curseur (80) est relié de part et d'autre aux éléments coulissants (76, 78) dans la direction de mouvement.

8. Dispositif selon la revendication 7, **caractérisé par le fait que** le curseur (80) présente une section transversale lentiforme dans le plan de l'ensemble d'étanchement (52).

9. Dispositif selon l'une des revendications 6 à 8, **caractérisé par le fait que** le curseur (80) est muni, sur ses bords extérieurs (82) tournés vers les bords de couplage (60, 66), d'une rainure respective (84) dans laquelle lesdits bords de couplage (60, 66) sont guidés lors d'un mouvement dudit curseur (80).
